# EUROPÄISCHE PATENTANMELDUNG

(11) **EP 3 855 257 A1**
(43) Veröffentlichungstag der Anmeldung: **28.07.2021**
(21) Anmeldenummer: 20153160.5
(22) Anmeldetag: 22.01.2020
(51) Int. Cl.: G05B 9/03

(54) **VERFAHREN ZUR ÜBERWACHUNG EINER FEHLERSICHEREN FUNKTION VON SENSOREN IN EINEM MOTOR**

(71) Anmelder: Siemens Aktiengesellschaft, 80333 München (DE)
(72) Erfinder: Nolte, Uwe, 30890 Barsinghausen (DE); Spannberger, Jan, 31535 Neustadt am Rübenberge (DE)

(57) **Zusammenfassung**

Die Erfindung betrifft ein System und ein Verfahren zur, insbesondere redundant diversitären Überwachung einer fehlerfreien Funktion von zumindest einem ersten (S1) und einem zweiten (S2) Drehzahl-Sensor eines Elektromotors (M), wobei die Drehzahl (n) zur exakten Bestimmung und Überwachung der Rotorposition genutzt wird, und wobei:

- ein erstes Produkt (P ₐ ) aus einem ersten aktuellen Zählwert (Z1) des ersten Ausgangssignals (A1) des ersten Sensors (S1) und einem Maximal-Zählwert (Z2max) des zweiten Ausgangssignals (A2) und

- ein zweites Produkt (P _{b} ) aus einem zweiten aktuellen Zählwert (Z2) des zweiten Ausgangssignals (A2) des zweiten Sensors (S2) und einem Maximal-Zählwert (Z1max) des ersten Ausgangssignals (A1) gebildet wird, und

- die beiden Produkte (P ₐ ,P _{b} ) zyklisch auf Gleichheit überprüft werden, und

- für den Fall, dass die Überprüfung negativ ausfällt, eine Fehlermeldung (F) generiert wird .

Dadurch bekommt man eine Position beider Sensoren in einem gemeinsamen Wertesystem und kann diese unmittelbar miteinander vergleichen. Damit ist eine exakte Bestimmung und Überwachung der Rotorposition möglich.

## Beschreibung

Die Erfindung betrifft ein Verfahren zur Überwachung einer fehlerfreien Funktion von zumindest einem ersten Sensor und einem zweiten Sensor, welche voneinander unabhängig arbeiten, wobei beide Sensoren zur Ermittlung einer Drehzahl eines Elektromotors betrieben werden, wobei die Drehzahl wiederum zur fehlersicheren Rotorpositionsbestimmung bei dem Elektromotor genutzt wird, wobei der erste Sensor ein erstes Ausgangssignal liefert und der zweite Sensor ein zweites Ausgangssignal liefert.

Auch betrifft die Erfindung ein Servoantriebs-System umfassend einen Elektromotor, einen ersten Sensor, einen zweiten Sensor, eine Automatisierungssteuerung mit einem Anwenderprogramm, wobei das Anwenderprogramm ausgestaltet ist, die Überwachung einer fehlerfreien Funktion des ersten Sensors und des zweiten Sensors durchzuführen, wobei beide Sensoren zur Ermittlung einer Drehzahl des Elektromotors ausgestaltet sind, wobei die Drehzahl wiederum zur fehlersicheren Rotorpositionsbestimmung genutzt wird, wobei der erste Sensor ein erstes Ausgangssignal liefert und der zweite Sensor einen zweites Ausgangssignal liefert.

Die Anforderungen an Motion Control Aufgaben in der Automatisierungstechnik nehmen kontinuierlich zu, werden immer vielfältiger und komplexer. Die Firma Siemens AG hat z.Z. ein am Markt befindliches Servoantriebssystem "SIMATIC Micro-Drive", welches einen perfekten Einstieg in die Digitalisierung bietet. Insbesondere im Hinblick auf sicherheitstechnische Anwendungen muss beispielsweise die Drehzahl, der Motorstrom, ein Drehmoment von einem eingesetzten Motor überwacht werden. Es müssen Safety-Funktionen, wie STO, SS1, SLT, SLS, SSM erfüllt werden. Vorgenannte Safety-Funktionen sind in der IEC 61508 und IEC 13849 genannt. Des Weiteren wird auch von SIL2 bzw. Cat.3 Leveln gesprochen.

Um ein Drehmoment zu begrenzen bzw. eine Rotorposition sicher zu bestimmen, geht man von einer Drehzahlüberwachung aus. Bei einer derartigen Überwachung wird durch einen gegenseitigen Vergleich zweier Sensoren die Drehzahl überwacht. Bei einem bekannten Gerät "Systemhandbuch Automatische Türsteuerung, SIDOOR ATE530S COATed/ATE531S COATED/ATE531S, Ausgabe 11/2019", wird zur Bestimmung der sicheren Rotorposition folgende Überwachung genutzt, es wird ein Vergleich einer realen Drehzahl mit einer über ein Grundwellenmodel des jeweiligen Motors berechneten Drehzahl durchgeführt. Zusätzlich wird ein regelmäßiger Austausch von Synchronisationstelegrammen mit den Drehimpulsgeber durchgeführt. Ein Algorithmus sorgt dafür, dass die Drehzahl eines Sensors außer dem funktional über ein mathematisches Modell des Motors überwacht wird, damit lassen sich Winkel- und Drehzahlfehler erkennen.

Bei den herkömmlichen Überwachungsmethoden ist es das Problem, dass typischerweise zwei Sensoren in unterschiedlichen Bezugssystemen arbeiten und nicht so einfach miteinander zu vergleichen sind. So hat z.B. ein Inkrementalwertgeber häufig 100 Striche pro Umdrehung was bei einer Vierfachabtastung zu 400 Flanken pro Umdrehung führt, während ein Hall-Geber beispielsweise 6 Segmente pro elektrischer Umdrehung hat. Ein Motor mit zwei Polpaaren hätte damit 2x6 Segmente und somit auch 12 Segmentwechsel pro mechanischer Umdrehung.

Es ist Aufgabe der vorliegenden Erfindung, ein Verfahren anzugeben, welches nicht so aufwändig ist, wie das bekannte Verfahren und auch relativ schnell ist, d.h. es muss leicht in ein Programm zu implementieren sein.

Die Aufgabe wird für das eingangs genannte Verfahren dadurch gelöst, dass ein erstes Produkt aus einem ersten aktuellen Zählwert des ersten Ausgangssignals und einem Maximal-Zählwert des zweiten Ausgangssignals und ein zweites Produkt aus einem zweiten aktuellen Zählwert des zweiten Ausgangssignals und einen Maximal-Zählwert des ersten Ausgangssignals gebildet wird und die beiden Produkte zyklisch auf Gleichheit überprüft werden, und für den Fall, dass die Überprüfung negativ ausfällt, wird eine Fehlermeldung generiert.

Die Erfindung geht davon aus, Eingangsinformationen von in der Regel zwei unterschiedlichen Sensoren (diversitär) in ein abstrahiertes und für beide Sensoren bzw. Signale gleiches Wertesystem zu transformieren. Hat man beispielsweise zum einen für den ersten Sensor einen Inkrementalgeber und zum anderen für den zweiten Sensor einen Hall-Geber, so kann man einen Momentanwert des ersten Sensors mit einem Zählumfang des zweiten Sensors multiplizieren und einen Momentanwert des zweiten Sensors mit einem Zählumfang des ersten Sensors multiplizieren, so bekommt man eine Position beider Sensoren in einen gemeinsamen Wertesystem und kann diese unmittelbar miteinander vergleichen.

Vorzugsweise werden die Maximal-Zählwerte bei einer Erstinbetriebnahme mit einem Initialisierungslauf ermittelt. Es bedeutet, der Motor wird derart angesteuert, dass er genau eine Umdrehung ausführt und in einer zugehörigen Recheneinheit werden die Drehimpulse bzw. Segmentwechsel für eine ganze Umdrehung gezählt.

Weiterhin ist es von Vorteil, wenn nach Auslösen einer Fehlermeldung weiter geprüft wird, ob über eine einstellbare Zeitspanne bei einem Inkrementalgeber, als ersten Sensor, Zählimpulse oder bei einem Hall-Sensor, als zweiten Sensor, Segmentwechsel ausbleiben und für den Fall, dass die Überprüfung positiv ausfällt, wird eine Meldung für einen Sensorleitungsausfall oder einen Sensorausfall generiert.

Um insbesondere sporadische Fehler zu erkennen, wird das erste Produkt und das zweite Produkt fortlaufend je in einem ersten bzw. zweiten Endloszähler aufaddiert und der erste Endloszähler mit dem zweiten Endloszähler periodisch auf Gleichheit geprüft, und für den Fall, dass eine Ungleichheit festgestellt wird, wird eine Fehlermeldung auf eine sporadische Störung ausgegeben. Mit dieser Implementation ergeben sich folgende Vorteile.

Eine einfache Umsetzung, einzelne Hall-Sektoren müssen nicht mehr genau erfasst werden, eine Richtungsumkehr und eine Richtungsbeibehaltung spielt keine Rolle mehr, Komplettausfälle einzelner Leitungen oder Sensoren werden sofort erkannt, intermittierende Unterbrechungen oder Kurzschlüsse machen sich durch Unterschiede in den Endloszählern bemerkbar und werden bei Überschreiten der Grenzwerte erkannt, einzelne fehlende Striche oder Hall-Sektoren verzerren die Endloszähler und werden bei Überschreiten der Grenzwerte erkannt. Als wesentlicher Vorteil der Endloszählung wird angesehen, dass sich praktisch alle Fehler in einer Verletzung der starren Kopplung der Sensoren bemerkbar machen und damit auch die Endlossummen verzerren. Somit ist die Betrachtung Endloszähler bzw. der Endlossumme ein ideales Verfahren, um Fehler zu erkennen.

Für eine Herleitung des gemeinsamen Wertesystems wird verfahrensgemäß das erste Ausgangssignal auf ein gemeinsames Wertesystem normiert, wodurch ein erster Normwert bereitgestellt wird und ebenfalls wird das zweite Ausgangssignal des zweiten Sensors auf das gleiche Wertesystem normiert, wodurch ein zweiter Normwert bereitgestellt wird, wobei die Normwerte zyklisch mittels eines ersten Quotienten aus dem ersten aktuellen Zählwert des ersten Ausgangssignals und dem ersten Maximal-Zählwert des ersten Ausgangssignals und einen zweiten Quotienten aus dem zweiten aktuellen Zählwert des zweiten Ausgangssignals und dem zweiten Maximal-Zählwert des zweiten Ausgangssignals gebildet werden.

Vorzugsweise werden die zuvor genannten Verfahrensschritte in einem Anwenderprogramm einer Automatisierungssteuerung ausgeführt.

Weiterhin wird bei dem Verfahren der Elektromotor durch einen Umrichter mit Energie versorgt und der Umrichter wiederum wird von der Automatisierungssteuerung gesteuert. Eine sichere Rotorposition ist eine notwendige Grundlage für die Bestimmung eines angegebenen Motormomentes und damit für eine sichere Kraftabgabe, um diese Sicherheit zu gewährleisten ist eine fehlersichere Rotorpositionsbestimmung notwendig.

Die zuvor genannten Verfahrensschritte beschreiben eine exakte Bestimmung und Überwachung der Rotorposition.

Die Aufgabe wird ebenfalls durch ein Servoantriebs-System umfassend, einen Elektromotor, einen ersten Sensor, einen zweiten Sensor, eine Automatisierungssteuerung mit einem Anwenderprogramm, wobei das Anwenderprogramm ausgestaltet ist, die Überwachung einer fehlerfreien Funktion des ersten Sensors und des zweiten Sensors durchzuführen, wobei beide Sensoren zur Ermittlung einer Drehzahl des Elektromotors ausgestaltet sind, wobei die Drehzahl wiederum zur fehlersicheren Rotorpositionsbestimmung bei dem Elektromotor genutzt wird, wobei der erste Sensor ein erstes Ausgangssignal liefert und der zweite Sensor ein zweites Ausgangssignal liefert, dadurch gelöst, das Anwenderprogramm folgendermaßen ausgestaltet ist. In dem Anwenderprogramm wird zyklisch ein erstes Produkt aus einem ersten aktuellen Zählwert des ersten Ausgangssignals und einem Maximal-Zählwert des zweiten Ausgangssignals und ein zweites Produkt aus einem zweiten aktuellen Zählwert des zweiten Ausgangssignals und einem Maximal-Zählwert des ersten Ausgangssignals gebildet und die beiden Produkte werden zyklisch auf Gleichheit überprüft, und für den Fall, dass die Überprüfung negativ ausfällt wird eine Fehlermeldung generiert.

Die Zeichnung zeigt ein Ausführungsbeispiel der Erfindung. Dabei zeigt:
- FIG 1: einen Programmablaufplan des Verfahrens und die
- FIG 2: ein Servoantriebs-System.

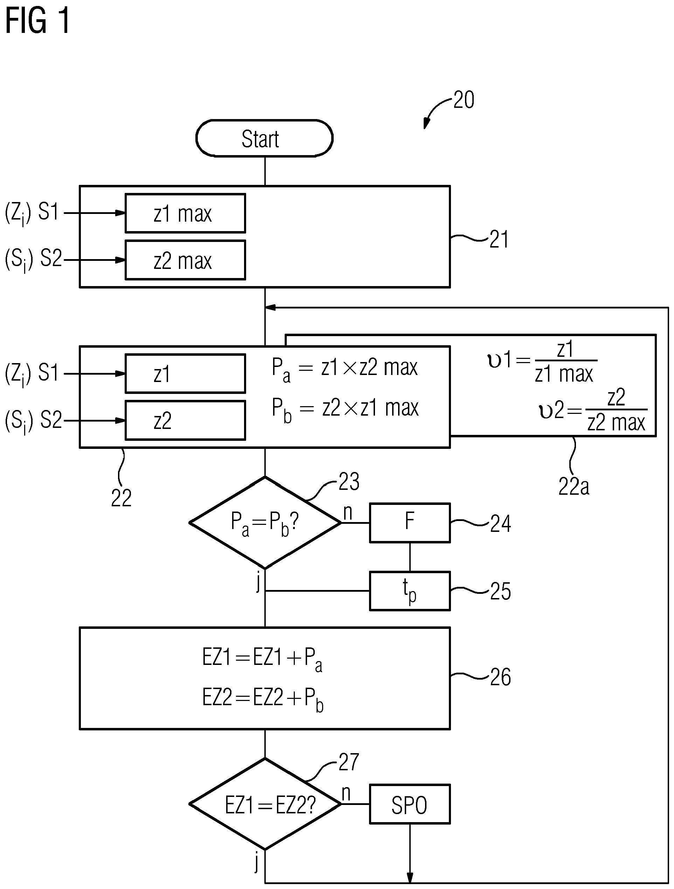

Gemäß FIG 1 ist ein Programmablaufplan 20 für das erfindungsgemäße Verfahren dargestellt. Ausgehend von einem Programmstart werden in einer Initialisierungsphase 21 von dem ersten Sensor S1 die Zählimpulse Zᵢ und von dem zweiten Sensor S2 die Segmentwechsel Sᵢ eingelesen. In der Initialisierungsphase 21 wird der Motor M derart programmtechnisch angesteuert, dass er genau eine Umdrehung ausführt, so können die maximalen Zählimpulse für einen ersten maximalen Zählwert Zlmax des ersten Sensors S1 und für einen zweiten maximalen Zählwert Z2max des zweiten Sensors S2 ermittelt werden.

In einem weiteren Verfahrensschritt, nämlich dem Zählerwert-Einlesen 22 werden die Zählimpulse Zᵢ bzw. die Segmentwechsel Sᵢ des ersten Zählers Z1 bzw. des zweiten Sensors S2 zyklisch eingelesen und dabei wird ein erstes Produkt Pₐ aus einem ersten aktuellen Zählwert Z1 des ersten Ausgangssignals A1 und einen Maximal-Zählwert Z2max des zweiten Ausgangssignals A2 gebildet und weiterhin wird ein zweites Produkt P_{b} aus einem zweiten aktuellen Zählwert Z2 des zweiten Ausgangssignals A2 und einem Maximal-Zählwert Zlmax des ersten Ausgangssignals A1 gebildet. In dem Programmabschnitt Gleichheitsprüfung 23 wird das erste Produkt Pₐ zyklisch mit dem zweiten Produkt P_{b} auf Gleichheit überprüft und für den Fall, dass die Überprüfung negativ ausfällt, wird eine Fehlermeldung F in dem Abschnitt Ausgabe Fehlermeldung 24 generiert.

In einem zusätzlichen Abschnitt Überwachungszeit-Starten 25 kann nach Auslösen der Fehlermeldung F weiter geprüft werden, ob über eine einstellbare Zeitspanne tₚ bei einem Inkrementalgeber als ersten Sensor S1 Zählimpulse Zᵢ oder bei einem Hall-Sensor als zweiten Sensor S2 Segmentwechsel Sᵢ ausbleiben. Und für den Fall, dass die Überprüfung positiv ausfällt, wird eine Meldung SLA für einen Sensor-Leitungsausfall oder einen Sensor-Ausfall generiert.

In einem Programmabschnitt Aufaddieren 26 wird ein erster Endloszähler EZ1 durch das zyklische Aufaddieren des ersten Produktes Pₐ und ein zweiter Endloszähler EZ2 durch das zyklische Aufaddieren des zweiten Produktes PD gebildet. Anschließend wird in einer weiteren Gleichheitsprüfung 27 der erste Endloszähler EZ1 mit dem zweiten Endloszähler EZ2 periodisch auf Gleichheit geprüft, und für den Fall, dass eine Ungleichheit festgestellt wird, wird eine Fehlermeldung auf eine sporadische Störung SPO ausgegeben.

Um das gemeinsame Wertesystem herzuleiten, wird in einen Normierungsschritte 22a ein erster Normwert γ1 dadurch gebildet, dass ein erster Quotient aus dem ersten aktuellen Zählwert Z1 des ersten Ausgangssignals A1 und dem ersten Maximal-Zählwert Zlmax des ersten Ausgangssignals A1 gebildet wird und ein zweiter Normwert γ1 dadurch gebildet wird, dass ein zweiter Quotient aus dem zweiten aktuellen Zählwert Z2 des zweiten Ausgangssignals A2 und einem zweiten Maximal-Zählwert Z2max des zweiten Ausgangssignals A2 gebildet wird.

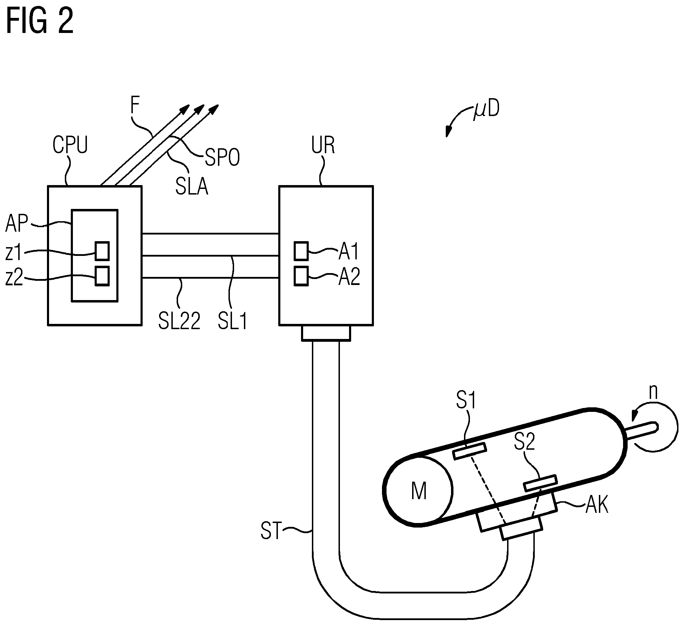

Gemäß FIG 2 ist ein Servoantriebs-System µD dargestellt. Es umfasst einen Elektromotor M, einen ersten Sensor S1, einen zweiten Sensor S2, eine Automatisierungssteuerung CPU mit einem Anwenderprogramm AP. Das Anwenderprogramm AP ist dabei ausgestaltet, die Überwachung einer fehlerfreien Funktion des ersten Sensors S1 und des zweiten Sensors S2 durchzuführen, wobei beide Sensoren S1,S2 zur Ermittlung einer Drehzahl n des Elektromotors M ausgestaltet sind, wobei die Drehzahl n wiederum zur fehlersicheren Rotorpositions-Bestimmung bei dem Elektromotor M genutzt wird.

Der erste Sensor S1 liefert ein erstes Ausgangssignal A1 und der zweite Sensor S2 liefert ein zweites Ausgangssignal A2. Der erste Sensor S1 und der zweite Sensors S2 sind in dem Motor M integriert. Über einen Anschlusskasten AK ist eine Steckleitung ST angesteckt und sie stellt die Verbindung zwischen einem Umrichter UR und dem Elektromotor M her. Der Umrichter UR ist über Kommunikationsleitungen mit der Automatisierungssteuerung CPU gekoppelt. Über eine erste Sensorleitung SL1 werden die Zählimpulse Zᵢ des ersten Sensors S1 zur Automatisierungssteuerung CPU geleitet und über eine zweite Sensorleitung SL2 werden die Segmentwechsel Sᵢ von dem Umrichter UR zur Automatisierungssteuerung CPU geleitet.

Die Automatisierungssteuerung CPU hat ein Anwenderprogramm AP in dem sie den ersten aktuellen Zählwert Z1 und den zweiten aktuellen Zählwert Z2 verfahrensgemäß auswertet. Sollten bei der Zählerauswertung Fehler auftreten, so generiert die Automatisierungssteuerung CPU mit Hilfe des Anwenderprogramms AP eine Fehlermeldung F oder eine Meldung auf Sensorleitungsausfall SLA oder eine Fehlermeldung auf sporadische Störung SPO.

## Patentansprüche

1. Verfahren zur Überwachung einer fehlerfreien Funktion von zumindest einem ersten Sensor (S1) und einem zweiten Sensor (S2), welche voneinander unabhängig arbeiten, wobei beide Sensoren (S1,S2) zur Ermittlung einer Drehzahl (n) eines Elektromotors (M) betrieben werden, wobei die Drehzahl (n) wiederum zur fehlersicheren Rotorpositionsbestimmung bei dem Elektromotor (M) genutzt wird, wobei der erste Sensor (S1) ein erstes Ausgangssignal (A1) liefert und der zweite Sensor (S2) ein zweites Ausgangssignal (A2) liefert,
**dadurch gekennzeichnet, dass**
- ein erstes Produkt (Pₐ) aus einem ersten aktuellen Zählwert (Z1) des ersten Ausgangssignals (A1) und einem Maximal-Zählwert (Z2max) des zweiten Ausgangssignals (A1) und
- ein zweites Produkt (P_{b}) aus einem zweiten aktuellen Zählwert (Z2) des zweiten Ausgangssignals (A2) und einem Maximal-Zählwert (Z1max) des ersten Ausgangssignals (A1) gebildet wird und
- die beiden Produkte (Pₐ,P_{b}) zyklisch auf Gleichheit überprüft werden, und
- für den Fall, dass die Überprüfung negativ ausfällt, wird eine Fehlermeldung (F) generiert.

2. Verfahren nach Anspruch 1, wobei die Maximal-Zählwerte (Z1max, Z2max) bei einer Erstinbetriebnahme mit einem Initialisierungslauf ermittelt werden.

3. Verfahren nach einem der Ansprüche 1 oder 2, wobei nach Auslösen einer Fehlermeldung (F) weiter geprüft wird, ob über eine einstellbare Zeitspanne (t_{P}) bei einem Inkrementalgeber als ersten Sensor (S1) Zählimpulse (Zᵢ) oder bei einem Hall-Sensor als zweiten Sensor (S2) Segmentwechsel (Sᵢ) ausbleiben und für den Fall, dass die Überprüfung positiv ausfällt wird eine Meldung (SLA) für einen Sensor-Leitungsausfall oder einen Sensor-Ausfall generiert.

4. Verfahren nach einem der Ansprüche 1 bis 3, wobei das erste Produkt (Pₐ) und das zweite Produkt (P_{b}) fortlaufend je in einen ersten bzw. zweiten Endloszähler (EZ1,EZ2) aufaddiert werden und der erste Endloszähler (EZ1) mit dem zweiten Endloszähler (EZ2) periodisch auf Gleichheit geprüft wird, und für den Fall, dass eine Ungleichheit festgestellt wird, wird eine Fehlermeldung auf eine sporadische Störung (SPO) ausgegeben.

5. Verfahren nach einem der Ansprüche 1 bis 4, wobei das erste Ausganssignal (A1) auf ein gemeinsames Wertesystem normiert wird, wodurch ein erster Normwert (v1) bereitgestellt wird und ebenfalls das zweite Ausgangssignal (A2) des zweiten Sensors (S2) auf das gemeinsame Wertesystem normiert wird, wodurch ein zweiter Normwert (v2) bereitgestellt wird, wobei die Normwerte (v1,v2) zyklisch mittels
- eines ersten Quotienten aus dem ersten aktuellen Zählwert (Z1) des ersten Ausgangssignals (A1) und dem ersten Maximal-Zählwert (Z1max) des ersten Ausgangssignals (A1) und
- eines zweiten Quotienten aus dem zweiten aktuellen Zählwert (Z2) des zweiten Ausgangssignals (A2) und dem zweiten Maximal-Zählwert (Z2max) des zweiten Ausgangssignals (A2) gebildet werden.

6. Verfahren nach einem der Ansprüche 1 bis 5, wobei die zuvor genannten Verfahrens-Schritte in einem Anwenderprogramm (AP) einer Automatisierungssteuerung (CPU) ausgeführt werden.

7. Verfahren nach Anspruch 6, wobei ein Umrichter (UR) den Elektromotor (M) mit Energie versorgt und der Umrichter wiederum von der Automatisierungssteuerung (CPU) gesteuert wird.

8. Servoantriebs-System (µD) umfassend
einen Elektromotor (M),
einen ersten Sensor (S1),
einen zweiten Sensor (S2),
eine Automatisierungssteuerung (CPU) mit
einem Anwenderprogramm (AP), wobei das Anwenderprogramm (AP) ausgestaltet ist, die Überwachung einer fehlerfreien Funktion des ersten Sensors (S1) und des zweiten Sensors (S2) durchzuführen, wobei beide Sensoren (S1,S2) zur Ermittlung einer Drehzahl (n) des Elektromotors (M) ausgestaltet sind, wobei die Drehzahl (n) wiederum zur fehlersicheren Rotorpositionsbestimmung bei dem Elektromotor (M) genutzt wird, wobei der erste Sensor (S1) ein erstes Ausgangssignal (A1) liefert und der zweite Sensor (2) ein zweites Ausgangssignal (A2) liefert,
**dadurch gekennzeichnet, dass** das Anwenderprogramm (AP) ausgestaltet ist
- ein erstes Produkt (Pₐ) aus einem ersten aktuellen Zählwert (Z1) des ersten Ausgangssignals (A1) und einem Maximal-Zählwert (Z2max) des zweiten Ausgangssignals (A1) und
- ein zweites Produkt (P_{b}) aus einem zweiten aktuellen Zählwert (Z2) des zweiten Ausgangssignals (A2) und einem Maximal-Zählwert (Z1max) des ersten Ausgangssignals (A1) zu bilden und
- die beiden Produkte (Pₐ,P_{b}) zyklisch auf Gleichheit zu überprüfen, und
- für den Fall, dass die Überprüfung negativ ausfällt wird eine Fehlermeldung (F) generiert.
